(19) Europäisches Patentamt / European Patent Office / Office européen des brevets

(11) **EP 2 020 560 B1**

(12) **EUROPÄISCHE PATENTSCHRIFT**

(45) Veröffentlichungstag und Bekanntmachung des Hinweises auf die Patenterteilung:
**12.10.2016 Patentblatt 2016/41**

(51) Int Cl.:
*F17C 13/12* (2006.01)  *F17C 13/02* (2006.01)

(21) Anmeldenummer: **08161617.9**

(22) Anmeldetag: **01.08.2008**

(54) **Elektronischer Durchflusssensor**

Electronic flow sensor

Capteur de débit électronique

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **01.08.2007 DE 102007035977**

(43) Veröffentlichungstag der Anmeldung:
**04.02.2009 Patentblatt 2009/06**

(60) Teilanmeldung:
**15194927.8 / 3 006 812**

(73) Patentinhaber:
• **Toptron GmbH**
  **58706 Menden (DE)**
• **Cavagna Group S.p.A.**
  **25012 Viadana die Calvisano BS (IT)**

(72) Erfinder: **Cramer, Wilhelm**
  **58706 Menden (DE)**

(74) Vertreter: **Zech, Stefan Markus**
  **Meissner Bolte Patentanwälte**
  **Rechtsanwälte Partnerschaft mbB**
  **Postfach 86 06 24**
  **81633 München (DE)**

(56) Entgegenhaltungen:
| | |
|---|---|
| EP-A- 0 653 585 | EP-A- 1 205 704 |
| EP-A- 1 356 973 | EP-A- 1 450 097 |
| DE-A1- 10 244 139 | DE-A1- 19 643 801 |
| DE-A1-102005 040 024 | JP-A- 59 187 178 |
| JP-A- 2006 266 384 | JP-A- 2006 283 840 |
| US-A- 5 360 139 | US-B2- 7 077 741 |

• **SCHMIDT G: "GRUNDLAGEN DER REGELUNGSTECHNIK" GRUNDLAGEN DER REGELUNGSTECHNIK, SPRINGER VERLAG, BERLIN, DE, 1982, XP002197937**

**Beschreibung**

Die Erfindung betrifft eine Sicherheitsabsperreinrichtung für eine Flüssiggasanlage mit einem oder mehreren Gasverbrauchern für Fahrzeuge und/oder Fahrzeuganhänger zur Vermeidung einer ungewollten Freisetzung von Gas. Eine derartige Anordnung ist bereits aus der DE 10 2005 040 024 A1 bekannt. Bei der dort beschriebenen Sicherheitsabsperreinrichtung wird eine Gaszufuhr im Falle eines Unfalls unterbrochen. Hierfür ist dort ein Unfallsensor, der beispielsweise als Beschleunigungs- und/oder Neigungssensor ausgebildet sein kann, vorgesehen.

Gegenüber diesem Stand der Technik besteht die Aufgabe der vorliegenden Erfindung darin, eine Sicherheitsabsperreinrichtung zu schaffen, die bei Unfällen, aber auch in anderen Störungssituationen eine Gaszufuhr zuverlässig absperrt.

Diese Aufgabe wird mit einer Sicherheitsabsperreinrichtung nach den Merkmalen des Patentanspruches 1 gelöst.

Vorteilhafte Weiterbildungen sind in den Unteransprüchen angegeben.

Weiterhin wird eine Flüssiggas-Anlage, bei der eine Sicherheitsabsperreinrichtung nach der vorliegenden Erfindung integriert ist sowie ein Verfahren zur Sicherheitsabsperrung einer Flüssiggas-Anlage vorgeschlagen.

Ein Kerngedanke der vorliegenden Erfindung besteht darin, dass ein Durchflusssensor zur Ermittlung eines aktuellen Gasflusses, der aus einem Gasvorratsbehälter abströmt, vorgesehen ist und dass eine Auswerteinheit diesen aktuellen Gasfluss anhand bestimmter Kriterien der vorgegebenen Flüssiggas-Anlage auf Plausibilität überprüft. In einer konkreten Ausführungsform ist dieses je nach Konfiguration der Flüssiggas-Anlage vorgegebene Kriterium eine maximal zulässige Änderungsrate $\Delta_{max}$ des Gasflusses. In diesem Fall wird in einer Auswerteinheit der aktuelle Gasfluss mit einem vorherigen Gasfluss verglichen. Zusätzlich kann als Kriterium zur Beurteilung der Plausibilität bzw. Unbedenklichkeit eines aktuellen Gasflusses ein zulässiger Maximalgasfluss herangezogen werden. In diesem Fall würde die Auswerteinheit den aktuellen Gasfluss mit einem zulässigen Maximalgasfluss $F_{max}$ vergleichen.

Eine Abtastfrequenz zur Ermittlung des aktuellen Gasflusses $F_a$ kann beispielsweise im Bereich von 10 bis 200 mal pro Minute liegen. Bevorzugtermaßen kann eine solche Abtastfrequenz im Bereich von 30 bis 120 mal pro Minute liegen, so dass der zeitliche Abstand zwischen einer Bestimmung des aktuellen Gasflusses und eines vorherigen Gasflusses zwischen 0,5 s und 5 s beträgt. In dem erfindungsgemäß vorgenommenen Vergleich $F_a - F_v > \Delta_{max}$ kommt es einerseits darauf an, dass die beispielsweise durch einen Leitungsbruch hervorgerufene Flussänderung, selbst wenn der Leitungsbruch an einem entfernten Abschnitt der Gasleitung auftritt, auch eingetreten ist, so dass die zeitlichen Abstände der Erfassung bzw. Berücksichtigung nicht zu klein gewählt werden dürfen; auf der anderen Seite muss ein zu langes Interwall jedoch auch vermieden werden, um möglichst rasch die Gaszufuhr absperren zu können und einen unnötigen Gasaustritt zu verhindern und um eine unbeabsichtigte Abschaltung beim Inbetriebneh-men von verschiedenen Gasgeräten innerhalb einer kurzen Zeit zu vermeiden.

In beiden Fällen ist schließlich eine Elektronikeinheit vorgesehen, die das elektromagnetische Gasventil zur Absperrung der Gaszufuhr ansteuert, wenn die Auswerteinheit einen im Rahmen des Überprüfungskriteriums unzulässigen Gasdurchfluss festgestellt hat, also einerseits sich der aktuelle Gasfluss $F_a$ um mehr als eine maximal zulässige Änderungsrate $\Delta_{max}$ vom vorherigen Gasfluss $F_v$ unterscheidet bzw. andererseits - in der ggf. zusätzlichen Variante - der aktuelle Gasfluss $F_a$ über dem zulässigen Maximalgasfluss $F_{max}$ liegt.

In einer konkret bevorzugten Ausgestaltung ist die maximal zulässige Änderungsrate $\Delta_{max}$ am Verbrauchswert des größten Gasverbrauches der Flüssiggas-Anlage bemessen. Es soll nämlich auch das Einschalten des Gasverbrauchers mit dem größten Gasverbrauch innerhalb der Flüssiggas-Anlage nicht zur automatischen Absperrung der Gaszufuhr führen, so dass die beim Einschalten dieses Gasverbrauchers auftretende Änderungsrate von der Sicherheitsabsperreinrichtung ohne Absperrung der Gaszufuhr toleriert werden muss.

Die maximal zulässige Änderungsrate $\Delta_{max}$ sollte, um ungewollte Absperrungen der Gaszufuhr zu vermeiden, um einen bestimmten Toleranzwert über dem Verbrauchswert des größten Gasverbrauchers $F_G$ liegen, wobei dieser Toleranzwert weniger als 30%, vorzugsweise weniger als 20% des Verbrauchswertes des größten Gasverbrauchers betragen kann.

Hinsichtlich der optional zusätzlichen Variante ist der zulässige Maximalgasfluss $F_{max}$ vorzugsweise an der Summe aller Verbrauchswerte $F_s$ der Gasverbraucher der Flüssiggas-Anlage bemessen bzw. orientiert.

Weiter vorzugsweise ist auch hier zur Vermeidung ungewollter Absperrungen eine Toleranz vorgesehen, so dass der zulässige Maximalgasfluss $F_{max}$ beispielsweise um einen Toleranzwert von weniger als 25%, vorzugsweise von weniger als 15% über der Summe aller Verbraucher $F_s$ der Gasverbraucher der Flüssiggas-Anlage liegt.

Alternativ ist es auch möglich, dass die maximal zulässige Änderungsrate $\Delta_{max}$ und/oder der zulässige Maximalgasfluss $F_{max}$ durch von den Verbrauchern gemeldete aktuelle Verbrauchswerte und/oder zu erwartende Gasverbrauchswerte aktuell verändert bzw. angepasst werden. Diese Informationen können an die Auswerteinheit und/oder die Elektronikeinheit geliefert werden, um so zu bestimmen, ob ein plausibler bzw. unplausibler Gasverbrauch vorliegt. Eine Absperrung kann dann vorgenommen werden, wenn der aus den Informationen der Gasverbraucher zu erwartende Gasverbrauch nicht mit dem am Durchflusssensor gemessenen Gasverbrauch übereinstimmt. Selbstverständlich können auch hier zweckentsprechend Toleranzen vorgesehen werden. Die Informationen über aktuelle Verbrauchswerte bzw. zu erwartende Gasverbrauchswerte der jeweiligen Gasverbraucher können insbesondere über ein Bus-System an die Elektronikeinheit bzw. die Auswerteinheit weitergegeben werden.

In einer bevorzugten Weiterbildung kann die Auswerteinheit mit einer Informationsausgabeeinheit, wie beispielsweise einer Anzeige, insbesondere einem Bildschirm/Display, oder einer Schnittstelle in Verbindung stehen, um eine oder mehrere der folgenden Informationen auszugeben: aktueller Gasfluss, über einen Zeitraum integrierter Gasfluss, insbesondere seit Flaschenwechsel integrierter Gasfluss, aktuell verfügbare Restmenge in einer Gasfalsche bzw. einem Gasvorratsbehälter sowie Warnhinweis bei Unterschreiten einer vorbestimmten Restmenge.

In einer möglichen Ausgestaltung der vorliegenden Erfindung ist weiterhin ein Unfallsensor zur Ermittlung eines Unfalls des Fahrzeugs und/oder Fahrzeuganhängers vorgesehen, der mit der Auswerteinheit und/oder der Elektronikeinheit in Wirkverbindung steht, wobei die Elektronikeinheit im Falle einer Unfallmeldung vom Unfallsensor das elektromagnetische Gasventil zur Absperrung der Gaszufuhr ansteuert. Insofern kann die aus dem Stand der Technik bereits bekannte Sicherheitsabsperreinrichtung mit der hier vorliegenden Sicherheitsabsperreinrichtung etwa in dieser Weise kombiniert werden, dass sowohl bei Ansprechen des Unfallsensors, als auch bei Ermittlung eines mit den Kriterien der speziellen Flüssiggas-Anlage nicht plausiblen Gasdurchflusses die Gaszufuhr abgesperrt wird. In dieser Ausgestaltung wird also für den Fall eines Leitungsbruches in Folge eines Unfalls eine doppelte Sicherheit gewährleistet, da in diesem Fall sowohl der Unfallsensor eine Absperrung der Gaszufuhr bewirken, als auch der Gasdurchfluss einen unplausiblen Wert annehmen würde, so dass auch aufgrund der Durchflussauswertung eine sofortige Absperrung der Gaszufuhr erfolgen würde.

In einer bevorzugten Ausgestaltung ist das elektromagnetische Gasventil derart aufgebaut, dass es bei fehlender Energieversorgung schließt, also die Gaszufuhr in der Flüssiggas-Anlage absperrt.

Das elektromagnetische Gasventil kann entweder strömungstechnisch einem Druckregler nach- oder vorgeschaltet sein. Das elektromagnetische Gasventil kann auch direkt am Druckregler oder am Gasvorratsbehälter angebracht sein.

Das elektromagnetische Gasventil und/oder die Auswerteinheit und/oder die Elektronikeinheit können an einer in das Fahrzeug und/oder den Fahrzeuganhänger eingebaute Batterie angeschlossen oder anschließbar sein.

In einer weiteren Ausgestaltung kann ein vorzugsweise im Inneren des Fahrzeuges oder des Fahrzeugsanhängers angeordneter Schalter zur manuellen Ein- und Abschaltung der Gasversorgung vorgesehen sein.

Die Sicherheitsabsperreinrichtung nach der vorliegenden Erfindung kann allgemein zusätzlich ein oder mehrere weitere Sensoren umfassen, insbesondere Gassensoren und/oder Rauchmelder, die weitere Gefahrensituationen ermitteln, insbesondere Gasaustritt und/oder Brand im Fahrzeug und/oder Fahrzeuganhänger, wobei die Sensoren zur Weitergabe einer Gefahrmeldung mit der Elektronikeinheit verbunden sind.

Hierbei sind die Elektronikeinheit und/oder die Sensoren bevorzugtermaßen so ausgelegt, dass im Fehlerfall das elektromagnetische Gasventil die Gaszufuhr automatisch absperrt.

Weiter wird nach der vorliegenden Erfindung auch eine Flüssiggas-Anlage für Fahrzeuge und/oder Fahrzeuganhänger vorgeschlagen, bei der ein oder mehrere Gasvorratsbehälter über eine oder mehrere Gasleitungen mit einem oder mehreren Gasverbrauchern verbunden oder verbindbar sind, mit einer Sicherheitsabsperreinrichtung zur Vermeidung einer ungewollten Freisetzung von Gas, wobei die Sicherheitsabsperreinrichtung umfasst: ein elektromagnetisches Gasventil zur Gaszufuhr-Absperrung, eine Elektronikeinheit zur Ansteuerung des elektromagnetischen Gasventils, einen Durchflusssensor zur Ermittlung eines aktuellen Gasflusses, der aus einem Gasvorratsbehälter abströmt, eine Auswerteinheit zum Vergleich des aktuellen Gasflusses $F_a$ mit einem vorherigen Gasfluss $F_v$ und Gasventils und eine Elektronikeinheit, die das elektromagnetische Gasventil zur Absperrung der Gaszufuhr ansteuert, wenn die Auswerteinheit einen aktuellen Gasfluss $F_a$ ermittelt hat, der sich um mehr als eine maximal zulässige Änderungsrate $\Delta_{max}$ vom vorherigen Gasfluss $F_v$ unterscheidet.

In einer ggf. zusätzlichen Variante wird auch noch eine Flüssiggasanlage für Fahrzeuge und/oder Fahrzeuganhänger vorgeschlagen, bei der ein oder mehrere Gasvorratsbehälter über eine oder mehrere Gasleitungen mit einem oder mehreren Gasverbrauchern verbunden oder verbindbar sind, mit einer Sicherheitsabsperreinrichtung zur Vermeidung einer ungewollten Freisetzung von Gas, wobei die Sicherheitsabsperreinrichtung umfasst: ein elektromagnetisches Gasventil zur Gaszufuhr-Absperrung, eine Elektronikeinheit zur Ansteuerung des elektromagnetischen Gasventils, einen Durchflusssensor zur Ermittlung eines aktuellen Gasflusses $F_a$, der aus einem Gasvorratsbehälter abströmt, eine Auswerteinheit zum Vergleich des aktuellen Gasflusses mit einem zulässigen Maximalgasfluss $F_{max}$ und eine Elektronikeinheit, die das elektromagnetische Gasventil zur Absperrung der Gaszufuhr ansteuert, wenn die Auswerteinheit einen aktuellen Gasfluss $F_a$ ermittelt hat, der über dem zulässigen Maximalgasfluss $F_{max}$ liegt.

In dieser zusätzlichen Variante ist insofern vorgesehen, dass eine Abschaltung sowohl dann erfolgt, wenn sich der aktuelle Gasfluss $F_a$ um mehr als eine maximal zulässige Änderungsrate $\Delta_{max}$ vom vorherigen Gasfluss $F_v$ unterscheidet, als auch dann, wenn der aktuelle Gasfluss $F_a$ über einem zulässigen Maximalgasfluss $F_{max}$ liegt.

Weiter wird auch ein entsprechendes Verfahren zur Sicherheitsabsperrung einer Flüssigkeits-Anlage mit den Merkmalen des Anspruches 24 vorgeschlagen, wobei ein aktueller Gasfluss $F_a$, der aus einer Gasquelle abströmt, ermittelt wird, der aktuelle Gasfluss $F_a$ mit einem vorherigen Gasfluss $F_v$ verglichen wird und dann, wenn der aktuelle Gasfluss $F_a$ sich um mehr als eine maximal zulässige Änderungsrate $\Delta_{max}$ vom vorherigen Gasfluss $F_v$ unterscheidet, die Gaszufuhr über ein elektromagnetisch angesteuertes Gasventil unterbrochen wird.

Eine mögliche zusätzliche Verfahrensvariante sieht vor, dass ein aktueller Gasfluss $F_a$, der aus einer Gasquelle abströmt, ermittelt wird, der aktuelle Gasfluss $F_a$ mit einem maximal zulässigen Gasfluss $F_{max}$ verglichen wird und dann, wenn der aktuelle Gasfluss $F_a$ über dem zulässigen Maximalgasfluss $F_{max}$ liegt, die Gaszufuhr über ein elektromagnetisch angesteuertes Gasventil unterbrochen wird.

Wird von dieser zusätzlichen Verfahrensvariante Gebrauch gemacht, werden beide Verfahren insofern miteinander kombiniert.

Weiter besteht eine vorzugsweise Ausgestaltung der vorgenannten Verfahren darin, dass zur Absperrung der Gaszufuhr in der Flüssiggas-Anlage die Stromzufuhr zum elektromagnetischen Gasventil unterbrochen wird.

Das bzw. die erfindungsgemäßen Verfahren können in einer ersten Alternative derartig ausgestaltet sein, dass die maximal zulässige Änderungsrate $\Delta_{max}$ und/oder der zulässige Maximalgasfluss $F_{max}$ für eine vorgegebene Konfiguration der Flüssiggas-Anlage fix vorgegeben bzw. vorausgewählt werden. In einer anderen Ausgestaltung ist es möglich, dass die maximal zulässige Änderungsrate $\Delta_{max}$ und/oder der zulässige Maximalgasfluss $F_{max}$ an die jeweilige Verbrauchssituation angepasst werden, das heißt die maximal zulässige Änderungsrate $\Delta_{max}$ bzw. der zulässige Maximalgasfluss $F_{max}$ anhand aktueller Gasverbräuche der Gasverbraucher bzw. zu erwartender Gasverbräuche der Gasverbraucher aktuell bestimmt werden. In einer konkreten Ausgestaltung kann die Elektronikeinheit beispielsweise von jedem Gasverbraucher die Information, dass er ein- oder ausgeschaltet ist sowie ggf. auch die zu erwartende Gasverbrauchsmenge, erhalten. Die Übermittlung dieser Information kann über separate Leitungen zu jedem Verbraucher bzw. über ein Bus-System erfolgen. Die Erfindung wird nachstehend auch hinsichtlich weiterer Merkmalen und Vorteile anhand der Beschreibung von Ausführungsbeispielen und unter Bezugnahme auf die beiliegenden Zeichnungen näher erläutert. Hierbei zeigen:

Fig. 1    ein schematisches Prinzip-Schaubild einer Ausführungsform der erfindungsgemäßen Sicherheitsabsperreinrichtung bzw. der erfindungsgemäßen FlüssiggasAnlage

Fig. 2    ein Verlaufsdiagramm des aktuellen Gasfluss über einen bestimmten Zeitraum

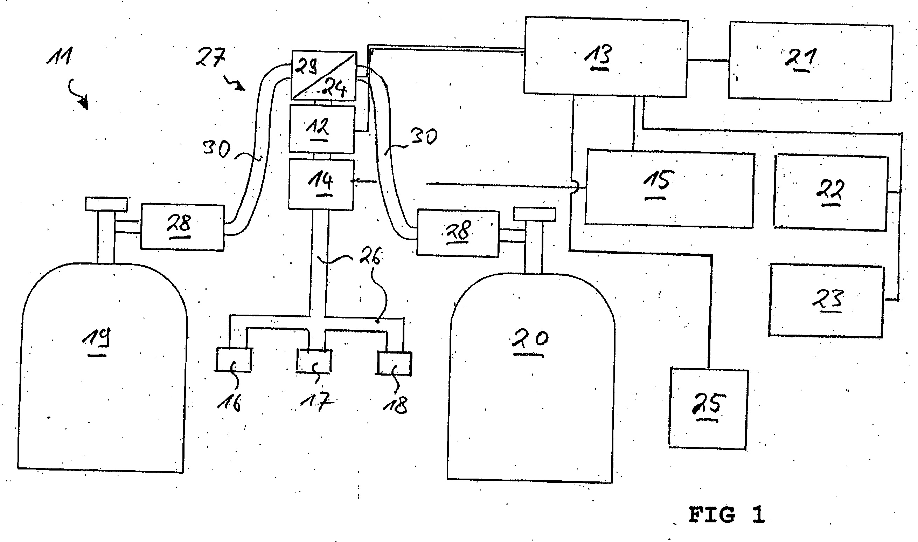

In Figur 1 ist ein Prinzipaufbau einer Flüssiggas-Anlage mit einer Ausführungsform einer erfindungsgemäßen Sicherheitsabsperreinrichtung 27 veranschaulicht. Die Flüssiggas-Anlage 11 umfasst zunächst zwei Gasvorratsbehälter 19, 20, die über Zuleitungen 30 an einen Umschalter 29 angeschlossen sind, in den gleichzeitig ein Druckregler 24 integriert ist. In den Zuleitungen 30 kann jeweils noch eine Schlauchbruchsicherung 28 angeordnet sein. Der Umschalter 29 arbeitet wie folgt: Wenn zwei volle Gasvorratsbehälter 19, 20 angeschlossen sind, wird der Umschalter 29 so eingestellt, dass aus dem vorgewählten Gasvorratsbehälter das Gas entnommen wird. Wenn dieser Gasvorratsbehälter leer wird, schaltet dieser Umschalter 29 automatisch auf den zweiten vollen Gasvorratsbehälter um.

Der Umschalter 29 schaltet in der vorliegenden Ausführungsform automatisch von dem leeren Vorratsbehälter auf den vollen um (und kann auch über eine noch zu erwähnende Elektronikeinheit 13 ansteuerbar sein), so dass wahlweise entweder dem Gasvorratsbehälter 19 oder dem Gasvorratsbehälter 20 Gas entnommen werden kann. In den meisten Anwendungsfällen dürfte es sinnvoll sein, zunächst einen ersten Gasvorratsbehälter zu entleeren und dann auf den zweiten Gasvorratsbehälter umzuschalten.

Welcher Gasvorratsbehälter momentan ausgewählt ist, kann auch über eine Informations-Ausgabeeinheit 21, beispielsweise einen Bildschirm ausgegeben werden.

Über Gasleitungen 26 wird das Gas vom Umschalter 29 bzw. Druckregler 24 an eine Mehrzahl von Gasverbrauchern 16 bis 18 geführt. Unmittelbar an den Umschalter 29 anschließend ist dabei ein elektromagnetisches Gasventil 12 sowie daran anschließend ein Durchflusssensor 14 vorgesehen. Das elektromagnetische Gasventil ist ausgebildet, um einen Gasstrom an die Gasverbraucher 16 bis 18 zu unterbrechen, wobei dies bevorzugtermaßen dadurch erfolgt, dass eine Stromversorgung des elektromagnetischen Gasventils 12 unterbrochen wird. Insofern bleibt das elektromagnetische Gasventil 12 in Offenstellung, solange ein vorgegebenes elektrisches Potential an ihm anliegt. Sinkt dieses elektrische Potential ab oder ist dieses Potential 0, schließt das elektromagnetische Gasventil und unterbricht die Gaszufuhr an die Mehrzahl der Gasverbraucher 16 bis 18.

Der Durchflusssensor 14 ist in der Lage, einen aktuellen Gasfluss $F_a$ an die Gasverbraucher 16 bis 18 zu detektieren. Der aktuelle Gasfluss $F_a$ wird hierbei an eine Auswerteinheit 15 übermittelt. Die Auswerteinheit 15 vergleicht den aktuellen Gasfluss $F_a$ in dieser Ausführungsform sowohl mit einem zulässigen Maximalgasfluss $F_{max}$, der sich aus der Summe aller Verbrauchswerte $F_s$ der Gasverbraucher 16 bis 18 der Flüssiggas-Anlage bemisst, als auch mit einem vorherigen Gasfluss $F_v$. Hierzu wird der jeweils ausgelesene aktuelle Gasfluss $F_a$ in der Auswerteinheit gespeichert, so dass er im nächsten Abfragezyklus als vorheriger Gasfluss $F_v$ zur Verfügung steht. Bei der vorliegenden Ausführungsform wird der aktuelle Gasfluss $F_a$ also gleichzeitig zwei Plausibilitätsproben unterzogen, nämlich einerseits daraufhin, ob er über dem insgesamt zulässigen Maximalgastluss $F_{max}$ liegt und weiter daraufhin, ob im Vergleich mit einem vorherigen Gastluss $F_v$ eine maximal zulässige Änderungsrate $\Delta_{max}$ überschritten ist. Liegt einer der beiden Fälle vor, das heißt ermittelt die Auswerteinheit einen unter den Kriterien der Flüssiggas-Anlage 11 nicht plausibel erscheinenden aktuellen Gastluss $F_a$, so wird ein Schließ- bzw. Fehlersignal an eine Elektronikeinheit 13 übermittelt, die das elektromagnetische Gasventil 12 in Schließposition bringt. Konkret würde im vorliegenden Fall die Elektronikeinheit 13 die Stromzufuhr für das elektromagnetische Gasventil 12 unterbrechen, so dass dieses automatisch schließt. Die Elektronikeinheit 12 bzw. die Auswerteinheit 15 stehen bevorzugtermaßen ebenfalls mit der Informations-Ausgabeeinheit 21 derart in Wirkverbindung, dass sich die durch die Auswerteinheit 15 ermittelten Daten ggf. aufbereitet ausgeben lassen und die momentanen Zustände der Flüssiggas-Anlage angezeigt werden, etwa der aktuelle Gasfluss $F_a$, ein vorheriger Gastluss $F_v$, die festgelegten Anlagenparameter $\Delta_{max}$ sowie $F_{max}$, der Verbrauchswert des größten Gasverbrauchers $F_G$, die Summe aller Verbrauchswerte der Gasverbraucher der Flüssiggas-Anlage $F_s$, einen seit letztem Flaschenwechsel erfolgten Gasverbrauch, eine Restmenge von Gas im jeweils aktuellen Gasvorratsbehälter sowie weitere Informationen bzw. beliebige Unterkombinationen hiervon.

Die hier nur beispielhaft dargelegte Sicherheitsabsperreinrichtung 27 umfasst als fakultative Ausgestaltung bzw. zur weiteren Erhöhung der Sicherheit noch zwei Unfallsensoren, nämlich einen Beschleunigungssensor 22 sowie einen Neigungssensor 23, so dass bei Ansprechen wenigstens eines der beiden Sensoren auf einen Unfall geschlossen wird und diese Information in der Elektronikeinheit 13 ebenfalls ein Schließen des elektromagnetischen Gasventils 12 durch Unterbrechen der Stromzufuhr bewirkt.

Schließlich kann noch ein manueller Schalter 25, beispielsweise im Innenraum eines Fahrzeugs oder Fahrzeuganhängers vorgesehen sein, der ebenfalls ein Schließen des elektromagnetischen Gasventils beispielsweise dadurch bewirkt, dass die Elektronikeinheit 13 die Stromzufuhr zum elektromagnetischen Gasventil 12 unterbricht. Der bereits erwähnte Umschalter 29 kann auch an die Elektronikeinheit 13 angeschlossen sein, so dass die Elektronikeinheit 13 vom Umschalter 29 ein Signal erhält, dass umgeschaltet wurde und eine entsprechende Anzeige bzw. Auswertung erfolgen kann.

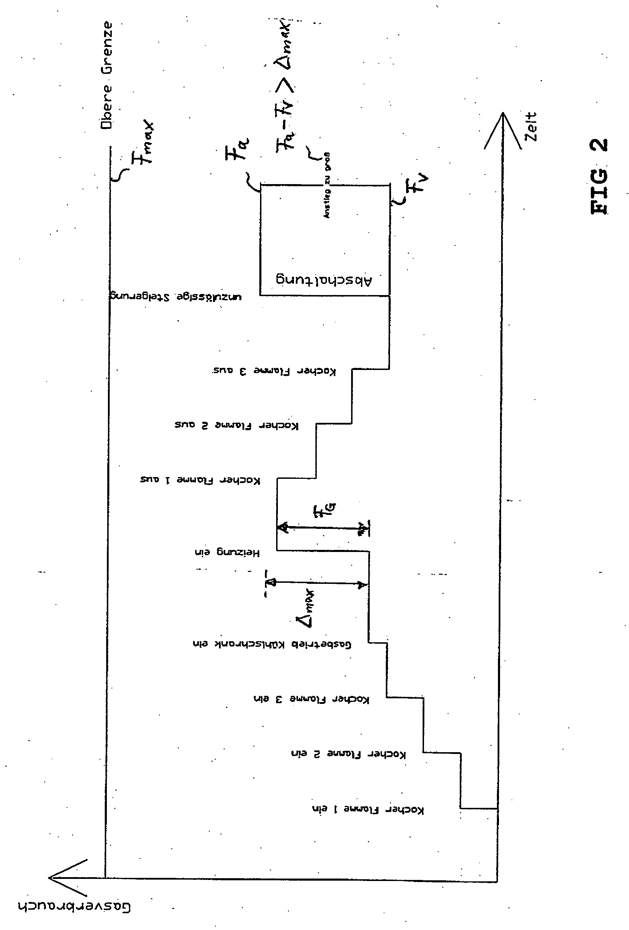

In Figur 2 ist noch rein zu Veranschaulichungszwecken ein möglicher Gasverbrauch über die Zeit dargestellt, wobei als letztes Ereignis eine Erhöhung des aktuellen Gasflusses $F_a$ gegenüber einem vorherigen Gasfluss $F_v$ erfolgt ist, die über einer maximal zulässigen Änderungsrate $\Delta_{max}$ liegt, so dass hierdurch über die Auswerteinheit 15 und die Elektronikeinheit 13 eine Absperrung des elektromagnetischen Gasventils 12 bewirkt wird.

Die Sicherheitsabsperreinrichtung 27 sperrt damit die Gaszufuhr ab, wenn

$$F_a - F_v > \Delta_{max} \text{ (erste Alternative eines unplausiblen Gasverbrauchs)}$$

oder

$$F_a > F_{max} \text{ (zweite Alternative eines unplausiblen Gasverbrauchs).}$$

Wie bereits mehrfach ausgeführt kann nach der Erfindung nur eine der beiden Plausibilitätsprüfungen durchgeführt werden. Bevorzugtermaßen werden beide Plausibilitätsprüfungen durchgeführt und eine Abschaltung bereits dann bewirkt, wenn nur eine Plausibilitätsprüfung einen unplausiblen Gasverbrauch ergibt.

**Bezugszeichenliste**

| | |
|---|---|
| 11 | Flüssiggas-Anlage |
| 12 | elektromagnetisches Gasventil |
| 13 | Elektronikeinheit |
| 14 | Durchflusssensor |
| 15 | Auswerteinheit |
| 16 bis 18 | Gasverbraucher |
| 19, 20 | Gasvorratsbehälter |
| 21 | Informations-Ausgabeeinheit |
| 22 | Unfallsensor, Beschleunigungssensor |
| 23 | Unfallsensor, Neigungssensor |
| 24 | Druckregler |

| 25 | Schalter |
|----|----------|
| 26 | Gasleitungen |
| 27 | Sicherheitsabsperreinrichtung |
| 28 | Schlauchbruchsicherung |
| 29 | Umschalter |
| 30 | Zuleitung |
| $F_a$ | aktueller Gasfluss |
| $F_v$ | vorheriger Gasfluss |
| $\Delta_{max}$ | maximal zulässige Änderungsrate |
| $F_{max}$ | zulässiger Maximalgasfluss |
| $F_G$ | Verbrauchswert des größten Gasverbrauches |
| $F_S$ | Summe aller Verbrauchswerte der Gasverbraucher der Flüssiggas-Anlage |

**Patentansprüche**

1. Sicherheitsabsperreinrichtung (27) für eine Flüssiggas-Anlage (11) mit einem oder mehreren Gasverbrauchern (16 bis 18) für Fahrzeuge und/oder Fahrzeuganhänger zur Vermeidung einer ungewollten Freisetzung von Gas umfassend

   a) ein elektromagnetisches Gasventil (12) zur Gaszufuhr-Absperrung,
   b) eine Elektronikeinheit (13) zur Ansteuerung des elektromagnetischen Gasventils (12), einen Durchflusssensor (14) zur Ermittlung eines aktuellen Gasflusses $F_a$, der aus einem Gasvorratsbehälter (19, 20) abströmt,

   **gekennzeichnet durch**

   c) eine Auswerteinheit (15) zum Vergleich des aktuellen Gasflusses $F_a$ mit einem vorherigen Gasfluss $F_v$ und
   d) eine Elektronikeinheit (13), die das elektromagnetische Gasventil (12) zur Absperrung der Gaszufuhr ansteuert, wenn die Auswerteinheit (15) einen aktuellen Gasfluss $F_a$ ermittelt hat, der sich um mehr als eine maximal zulässige Änderungsrate $\Delta_{max}$ vom vorherigen Gasfluss $F_v$ unterscheidet.

2. Sicherheitsabsperreinrichtung (27) für eine Flüssiggas-Anlage (11) mit einem oder mehreren Gasverbrauchern (16 bis 18) für Fahrzeuge und/oder Fahrzeuganhänger zur Vermeidung einer ungewollten Freisetzung von Gas nach Patentanspruch 1, umfassend

   a) ein elektromagnetisches Gasventil (12) zur Gaszufuhr-Absperrung,
   b) eine Elektronikeinheit (13) zur Ansteuerung des elektromagnetischen Gasventils (12), einen Durchflusssensor (14) zur Ermittlung eines aktuellen Gasflusses $F_a$, der aus einem Gasvorratsbehälter (19, 20) abströmt
   c) eine Auswerteinheit (15) zum Vergleich des aktuellen Gasflusses mit einem zulässigen Maximalgasfluss $F_{max}$
   d) eine Elektronikeinheit (13), die das elektromagnetische Gasventil (12) zur Absperrung der Gaszufuhr ansteuert, wenn die Auswerteinheit einen aktuellen Gasfluss $F_a$ ermittelt hat, der über dem zulässigen Maximalgasfluss $F_{max}$ liegt.

3. Sicherheitsabsperreinrichtung nach Anspruch 1,
   **dadurch gekennzeichnet,**
   **dass** die maximal zulässige Änderungsrate $\Delta_{max}$ bemessen ist am Verbrauchswert des größten Gasverbrauches der Flüssiggas-Anlage (11).

4. Sicherheitsabsperreinrichtung nach Anspruch 3,
   **dadurch gekennzeichnet,**
   **dass** die maximal zulässige Änderungsrate $\Delta_{max}$ um einen Toleranzwert von weniger als 30 %, vorzugsweise von weniger als 20 % über dem Verbrauchswert des größten Gasverbrauches $F_G$ liegt.

5. Sicherheitsabsperreinrichtung nach einem der Ansprüche 2 bis 4,
   **dadurch gekennzeichnet,**
   **dass** der zulässige Maximalgasfluss $F_{max}$ bemessen ist an der Summe aller Verbrauchswerte $F_S$ der Gasverbraucher (16 bis 18) der Flüssiggas-Anlage (11).

**6.** Sicherheitsabsperreinrichtung nach Anspruch 5,
**dadurch gekennzeichnet,**
**dass** der zulässige Maximalgasfluss $F_{max}$ um einen Toleranzwert von weniger als 25 %, vorzugsweise von weniger als 15 % über der Summe aller Verbrauchswerte $F_S$ der Gasverbraucher (16 bis 18) der Flüssiggas-Anlage (11) liegt.

**7.** Sicherheitsabsperreinrichtung nach einem der Ansprüche 1 bis 6,
**dadurch gekennzeichnet,**
**dass** die maximal zulässige Änderungsrate $\Delta_{max}$ und/oder der maximal zulässige Maximalgasfluss $F_{max}$ jeweils aktuell anhand von aktueller Verbrauchsinformationen der Gasverbraucher (16 bis 18) festgelegt werden.

**8.** Sicherheitsabsperreinrichtung nach Anspruch 7,
**dadurch gekennzeichnet,**
**dass** die Gasverbraucher (16 bis 18) Informationen darüber, ob sie ein- oder ausgeschaltet sind, und/oder über den zu erwartenden Gasverbrauch an die Elektronikeinheit (13) und/oder die Auswerteinheit (15), beispielsweise über ein Bus-System, übermitteln.

**9.** Sicherheitsabsperreinrichtung nach einem der Ansprüche 1 bis 8,
**dadurch gekennzeichnet,**
**dass** die Auswerteinheit (15) mit einer Informations-Ausgabeeinheit (21) in Wirkverbindung steht, um eine oder mehrere der folgenden Informationen auszugeben:

- aktueller Gasfluss
- über einen Zeitraum integrierter Gasfluss, insbesondere seit Flaschenwechsel integrierter Gasfluss
- aktuell verfügbare Restmenge in einer Gasflasche bzw. einem Gasvorratsbehälter
- Warnhinweis bei Unterschreiten einer vorbestimmten Restmenge

**10.** Sicherheitsabsperreinrichtung nach einem der Ansprüche 1 bis 9,
**dadurch gekennzeichnet,**
**dass** weiterhin ein Unfallsensor (22, 23) zur Ermittlung eines Unfalls des Fahrzeugs und/oder Fahrzeuganhängers vorgesehen ist, der mit der Auswerteinheit (15) und/oder der Elektronikeinheit (13) in Wirkverbindung steht, wobei die Elektronikeinheit (13) im Falle einer Unfallmeldung vom Unfallsensor (22, 23) das elektromagnetische Gasventil (12) zur Absperrung der Gaszufuhr ansteuert.

**11.** Sicherheitsabsperreinrichtung nach einem der Ansprüche 1 bis 10,
**dadurch gekennzeichnet,**
**dass** das elektromagnetische Gasventil (12) bei fehlender elektrischer Energieversorgung die Gaszufuhr in der Flüssiggas-Anlage (11) absperrt.

**12.** Sicherheitsabsperreinrichtung nach einem der Ansprüche 1 bis 11,
**dadurch gekennzeichnet,**
**dass** das elektromagnetische Gasventil (12) gasströmungstechnisch einem Druckregler (24) nachgeschaltet ist.

**13.** Sicherheitsabsperreinrichtung nach Anspruch 12,
**dadurch gekennzeichnet,**
**dass** das elektromagnetische Gasventil (12) direkt am Druckregler (24) angebracht ist.

**14.** Sicherheitsabsperreinrichtung nach Anspruch 12 oder 13,
**dadurch gekennzeichnet,**
**dass** der Druckregler (24) direkt an einem Gasvorratsbehälter (19, 20) angebracht oder anbringbar ist.

**15.** Sicherheitsabsperreinrichtung nach einem der Ansprüche 1 bis 11,
**dadurch gekennzeichnet,**
**dass** das elektromagnetische Gasventil (12) gasströmungstechnisch einem Druckregler (24) vorgeschaltet ist.

**16.** Sicherheitsabsperreinrichtung nach Anspruch 15,
**dadurch gekennzeichnet,**
**dass** das elektromagnetische Gasventil (12) direkt an einem Gasvorratsbehälter (19, 20) angebracht oder anbringbar ist.

**17.** Sicherheitsabsperreinrichtung nach Anspruch 15 oder 16,
**dadurch gekennzeichnet,**
**dass** das elektromagnetische Gasventil (12) direkt am Druckregler (24) angebracht ist.

**18.** Sicherheitsabsperreinrichtung nach einem der vorhergehenden Ansprüche,
**dadurch gekennzeichnet,**
**dass** das elektromagnetische Gasventil (12) an eine in das Fahrzeug und/oder den Fahrzeuganhänger eingebaute Batterie angeschlossen oder anschließbar ist.

**19.** Sicherheitsabsperreinrichtung nach einem der vorhergehenden Ansprüche,
**dadurch gekennzeichnet,**
**dass** der Unfallsensor ein Beschleunigungssensor (22) und/oder ein Neigungssensor (23) ist.

**20.** Sicherheitsabsperreinrichtung nach einem der vorhergehenden Ansprüche,
**dadurch gekennzeichnet,**
**dass** ein vorzugsweise im Inneren des Fahrzeugs oder Fahrzeuganhängers angeordneter Schalter (25) zum manuellen Abschalten der Gasversorgung vorgesehen ist.

**21.** Sicherheitsabsperreinrichtung nach einem der vorhergehenden Ansprüche,
**dadurch gekennzeichnet,**
**dass** zusätzlich ein oder mehrere weitere Sensoren vorgesehen sind, insbesondere Gassensoren und/oder Rauchmelder, die weitere Gefahrensituationen ermitteln, insbesondere Gasaustritt und/oder Brand im Fahrzeug und/oder Fahrzeuganhänger, wobei die Sensoren zur Weitergabe einer Gefahrmeldung mit der Elektronikeinheit (13) verbunden sind.

**22.** Sicherheitsabsperreinrichtung nach einem der vorhergehenden Ansprüche,
**dadurch gekennzeichnet,**
**dass** Elektronikeinheit (13) und/oder Sensoren (22, 23) so ausgelegt sind, dass im Fehlerfall automatisch das elektromagnetische Gasventil (12) die Gaszufuhr absperrt.

**23.** Flüssiggas-Anlage (11) für Fahrzeuge und/oder Fahrzeuganhänger mit einer Sicherheitsabsperreinrichtung nach einem der Ansprüche 1 bis 22,

> a) bei der ein oder mehrere Gasvorratsbehälter (19, 20) über eine oder mehrere Gasleitungen (26) mit einem oder mehreren Gasverbrauchern (16 bis 18) verbunden oder verbindbar sind,
> b) mit einer Sicherheitsabsperreinrichtung (27) zur Vermeidung einer ungewollten Freisetzung von Gas.

**24.** Verfahren zur Sicherheitsabsperrung einer Flüssiggas-Anlage (11) für Fahrzeuge und/oder Fahrzeuganhänger, insbesondere einer Flüssiggas-Anlage (11) nach Anspruch 23, zur Vermeidung einer ungewollten Freisetzung von Gas, vorzugsweise unter Verwendung einer Sicherheitsabsperreinrichtung (27) nach einem der Ansprüche 1 bis 22, bei dem

> a) ein aktueller Gasfluss $F_a$, der aus einer Gasquelle (19, 20) abströmt, ermittelt wird,
> b) der aktuelle Gasfluss $F_a$ mit einem vorherigen Gasfluss $F_v$ verglichen wird und
> c) dann, wenn der aktuelle Gasfluss $F_a$ sich um mehr als eine maximal zulässige Änderungsrate $\Delta_{max}$ vom vorherigen Gasfluss $F_v$ unterscheidet, die Gaszufuhr über ein elektromagnetisch angesteuertes Gasventil (12) unterbrochen wird.

**25.** Verfahren nach Anspruch 24, zur Sicherheitsabsperrung einer Flüssiggas-Anlage (11) für Fahrzeuge und/oder Fahrzeuganhänger, insbesondere einer Flüssiggas-Anlage (11) nach Anspruch 23, zur Vermeidung einer ungewollten Freisetzung von Gas im Falle eines Unfalles des Fahrzeugs und/oder Fahrzeuganhängers, vorzugsweise unter Verwendung einer Sicherheitsabsperreinrichtung (27) nach einem der Ansprüche 1 bis 22, bei dem

> a) ein aktueller Gasfluss $F_a$, der aus einer Gasquelle abströmt, ermittelt wird,
> b) der aktuelle Gasfluss $F_a$ mit einem zulässigen Maximalgasfluss $F_{max}$ verglichen wird und
> c) dann, wenn der aktuelle Gasfluss größer als der zulässige Maximalgasfluss $F_{max}$ ist, die Gaszufuhr über ein elektromagnetisch angesteuertes Gasventil (12) unterbrochen wird.

**26.** Verfahren nach Anspruch 24 oder 25,
**dadurch gekennzeichnet,**
**dass** zur Absperrung der Gaszufuhr in der Flüssiggas-Anlage die Stromzufuhr zum elektromagnetischen Gasventil unterbrochen wird.

**27.** Verfahren nach einem der Ansprüche 24 bis 26,
**dadurch gekennzeichnet,**
**dass** die maximal zulässige Änderungsrate $\Delta_{max}$ und/oder der zulässige Maximalgasfluss $F_{max}$ für eine jeweilig gegebene Konfiguration der Flüssiggas-Anlage (11) fix vorausgewählt werden oder im Laufe des Betriebs der Flüssiggas-Anlage (11) an aktuelle Verbrauchssituationen bzw. zu erwartende Verbrauchssituationen angepasst werden.

**Claims**

**1.** A safety shut-off device (27) for a liquid gas system (11) having one or more gas consumers (16 to 18) for vehicles and/or vehicle trailers for avoiding an unwanted release of gas, comprising

a) an electromagnetic gas valve (12) for shutting off the gas supply,
b) an electronic unit (13) for controlling the electromagnetic gas valve (12), a flow sensor (14) for detecting a current gas flow $F_a$ being discharged from a gas reservoir (19, 20),

**characterized by**

c) an evaluation unit (15) for comparing the current gas flow $F_a$ to a previous gas flow $F_v$, and
d) an electronic unit (13) which controls the electromagnetic gas valve (12) for shutting off the gas supply when the evaluation unit (15) detects a current gas flow $F_a$ which differs from the previous gas flow $F_v$ by more than a maximum admissible change rate $\Delta_{max}$.

**2.** The safety shut-off device (27) for a liquid gas system (11) having one or more gas consumers (16 to 18) for vehicles and/or vehicle trailers for avoiding an unwanted release of gas, according to claim 1, comprising

a) an electromagnetic gas valve (12) for shutting off the gas supply,
b) an electronic unit (13) for controlling the electromagnetic gas valve (12), a flow sensor (14) for detecting a current gas flow $F_a$ being discharged from a gas reservoir (19, 20),
c) an evaluation unit (15) for comparing the current gas flow $F_a$ to an admissible maximum gas flow $F_{max}$,
d) an electronic unit (13) which controls the electromagnetic gas valve (12) for shutting off the gas supply when the evaluation unit (15) detects a current gas flow $F_a$ which is higher than the admissible maximum gas flow $F_{max}$.

**3.** The safety shut-off device according to claim 1,
**characterized in that**
the maximum admissible change rate $\Delta_{max}$ is calculated according to the consumption value of the largest gas consumer of the liquid gas system (11).

**4.** The safety shut-off device according to claim 3,
**characterized in that**
the maximum admissible change rate $\Delta_{max}$ is higher than the consumption value for the largest gas consumer $F_G$ by a tolerance value of less than 30%, preferably less than 20%.

**5.** The safety shut-off device according to any one of claims 2 to 4, **characterized in that**
the admissible maximum gas flow $F_{max}$ is calculated according to the sum of all the consumption values $F_S$ of the gas consumers (16 to 18) of the liquid gas system (11).

**6.** The safety shut-off device according to claim 5,
**characterized in that**
the admissible maximum gas flow $F_{max}$ is higher than the sum of all the consumption values $F_S$ of the gas consumers (16 to 18) of the liquid gas system (11) by a tolerance value of less than 25%, preferably less than 15%.

**7.** The safety shut-off device according to any one of claims 1 to 6, **characterized in that**
the maximum admissible change rate $\Delta_{max}$ and/or the admissible maximum gas flow $F_{max}$ are currently fixed in each case using the current consumption information of the gas consumers (16 to 18).

**8.** The safety shut-off device according to claim 7,
**characterized in that**
the gas consumers (16 to 18) transmit information on whether they are switched on or off and/or their expected gas consumption to the electronic unit (13) and/or the evaluation unit (15), for example via a bus system.

**9.** The safety shut-off device according to any one of claims 1 to 8, **characterized in that**
the evaluation unit (15) is in active communication with an information output unit (21) for outputting one or more of the following items of information:

- current gas flow
- gas flow integrated over a period of time, in particular gas flow integrated since a change of bottles
- currently available residual amount in a gas bottle or a gas reservoir
- alarm indication upon falling below a predefined residual amount.

**10.** The safety shut-off device according to any one of claims 1 to 9, **characterized in that**
an accident sensor (22, 23) which is in active communication with the evaluation unit (15) and/or the electronic unit (13) is moreover provided for detecting an accident befalling the vehicle and/or vehicle trailer, wherein the electronic unit (13) controls the electromagnetic gas valve (12) for shutting off the gas supply when notified by the accident sensor (22, 23) of an accident.

**11.** The safety shut-off device according to any one of claims 1 to 10, **characterized in that**
the electromagnetic gas valve (12) shuts off the gas supply in the liquid gas system (11) in the absence of an electrical energy supply.

**12.** The safety shut-off device according to any one of claims 1 to 11, **characterized in that**
the electromagnetic gas valve (12) is gas-fluidically connected downstream of a pressure regulator (24).

**13.** The safety shut-off device according to claim 12,
**characterized in that**
the electromagnetic gas valve (12) is directly mounted to the pressure regulator (24).

**14.** The safety shut-off device according to claim 12 or 13,
**characterized in that**
the pressure regulator (24) is directly mounted or mountable to a gas reservoir (19, 20).

**15.** The safety shut-off device according to any one of claims 1 to 11, **characterized in that**
the electromagnetic gas valve (12) is gas-fluidically connected upstream of a pressure regulator (24).

**16.** The safety shut-off device according to claim 15,
**characterized in that**
the electromagnetic gas valve (12) is directly mounted or mountable to a gas reservoir (19, 20).

**17.** The safety shut-off device according to claim 15 or 16,
**characterized in that**
the electromagnetic gas valve (12) is directly mounted to the pressure regulator (24).

**18.** The safety shut-off device according to any one of the preceding claims,
**characterized in that**
the electromagnetic gas valve (12) is connected or connectable to a battery installed in the vehicle and/or vehicle trailer.

**19.** The safety shut-off device according to any one of the preceding claims,
**characterized in that**
the accident sensor is an acceleration sensor (22) and/or an inclination sensor (23).

**20.** The safety shut-off device according to any one of the preceding claims, **characterized in that** a switch (25) preferably arranged in the interior of the vehicle or vehicle trailer is provided for manually switching off the gas supply.

**21.** The safety shut-off device according to any one of the preceding claims, **characterized in that** one or more sensors, in particular gas sensors and/or smoke detectors, are additionally provided which detect further hazardous situations, in particular gas leakage and/or fire in the vehicle and/or vehicle trailer, wherein the sensors are in communication with the electronic unit (13) for transmitting a danger notification.

**22.** The safety shut-off device according to any one of the preceding claims, **characterized in that** the electronic unit (13) and/or sensors (22, 23) are configured such that the electromagnetic gas valve (12) automatically shuts off the gas supply in case of failure.

**23.** A liquid gas system (11) for vehicles and/or vehicle trailers having a safety shut-off device according to any one of claims 1 to 22,

a) in which one or more gas reservoirs (19, 20) are connected or connectable to one or more gas consumers (16 to 18) via one or more gas lines (26),
b) comprising a safety shut-off device (27) for avoiding an unwanted release of gas.

**24.** A method for a safety shut-off of a liquid gas system (11) for vehicles and/or vehicle trailers, in particular a liquid gas system (11) according to claim 23, for avoiding an unwanted release of gas, preferably using a safety shut-off device (27) according to any one of claims 1 to 22, in which

a) a current gas flow $F_a$ exiting a gas source (19, 20) is detected,
b) the current gas flow $F_a$ is compared to a previous gas flow $F_v$, and
c) when the current gas flow $F_a$ differs from the previous gas flow $F_v$ by more than a maximum admissible change rate $\Delta_{max}$, the gas supply is then interrupted via an electromagnetically controlled gas valve (12).

**25.** A method according to claim 24, for a safety shut-off of a liquid gas system (11) for vehicles and/or vehicle trailers, in particular a liquid gas system (11) according to claim 23, for avoiding an unwanted release of gas in case of an accident of the vehicle and/or vehicle trailer, preferably using a safety shut-off device (27) according to any one of claims 1 to 22, in which

a) a current gas flow $F_a$ exiting a gas source is detected,
b) the current gas flow $F_a$ is compared to an admissible maximum gas flow $F_{max}$, and
c) when the current gas flow is greater than the admissible maximum gas flow $F_{max}$, the gas supply is then interrupted via an electromagnetically controlled gas valve (12).

**26.** The method according to claim 24 or 25, **characterized in that** the power supply to the electromagnetic gas valve is interrupted so as to shut off the gas supply in the liquid gas system.

**27.** The method according to any one of claims 24 to 26, **characterized in that** the maximum admissible change rate $\Delta_{max}$ and/or the admissible maximum gas flow $F_{max}$ are fixedly preselected for a respectively given configuration of the liquid gas system (11) or are adapted to current consumption situations, respectively consumption situations to be expected, while the liquid gas system (11) is in operation.

**Revendications**

**1.** Dispositif d'arrêt de sécurité (27) pour une installation de gaz liquide (11) à un ou plusieurs consommateurs de gaz (16 à 18) pour véhicules et/ou remorques de véhicule destiné à éviter un dégagement intempestif de gaz comprenant

a) une vanne de gaz électromagnétique (12) destinée à arrêter l'arrivée de gaz,

b) une unité électronique (13) destinée à activer la vanne de gaz électromagnétique (12), un capteur de débit (14) destiné à déterminer un flux de gaz actuel $F_a$ qui s'écoule d'un réservoir de stockage de gaz (19, 20), **caractérisé par**

c) une unité d'évaluation (15) destinée à comparer le flux de gaz actuel $F_a$ à un flux de gaz précédent $F_v$ et

d) une unité électronique (13) qui active la vanne de gaz électromagnétique (12) pour l'arrêt de l'arrivée de gaz si l'unité d'évaluation (15) a déterminé un flux de gaz actuel $F_a$ qui diffère du flux de gaz précédent $F_v$ de plus d'un taux de changement maximal admissible $\Delta_{max}$.

2. Dispositif d'arrêt de sécurité (27) pour une installation de gaz liquide (11) à un ou plusieurs consommateurs de gaz (16 à 18) pour véhicules et/ou remorques de véhicule destiné à éviter un dégagement intempestif de gaz selon la revendication 1, comprenant

a) une vanne de gaz électromagnétique (12) destinée à arrêter l'arrivée de gaz,

b) une unité électronique (13) destinée à activer la vanne de gaz électromagnétique (12), un capteur de débit (14) destiné à déterminer un flux de gaz actuel $F_a$ qui s'écoule d'un réservoir de stockage de gaz (19, 20),

c) une unité d'évaluation (15) destinée à comparer le flux de gaz actuel à un flux de gaz maximal admissible $F_{max}$,

d) une unité électronique (13) qui active la vanne de gaz électromagnétique (12) pour l'arrêt de l'arrivée de gaz si l'unité d'évaluation (15) a déterminé un flux de gaz actuel $F_a$ qui est supérieur au flux de gaz maximal admissible $F_{max}$.

3. Dispositif d'arrêt de sécurité selon la revendication 1,
**caractérisé en ce que**
le taux de changement maximal admissible $\Delta_{max}$ est calculé en fonction de la valeur de consommation de la plus grande consommation de gaz de l'installation de gaz liquide (11).

4. Dispositif d'arrêt de sécurité selon la revendication 3,
**caractérisé en ce que**
le taux de changement maximal admissible $\Delta_{max}$ est supérieur à la valeur de consommation de la plus grande consommation de gaz $F_G$ d'une valeur de tolérance de moins de 30 %, de préférence de moins de 20 %.

5. Dispositif d'arrêt de sécurité selon l'une des revendications 2 à 4, **caractérisé en ce que**
le flux de gaz maximal admissible $F_{max}$ est calculé en fonction de la somme de toutes les valeurs de consommation $F_S$ des consommateurs de gaz (16 à 18) de l'installation de gaz liquide (11).

6. Dispositif d'arrêt de sécurité selon la revendication 5,
**caractérisé en ce que**
le flux de gaz maximal admissible $F_{max}$ est supérieur à la somme de toutes les valeurs de consommation $F_S$ des consommateurs de gaz (16 à 18) de l'installation de gaz liquide (11) d'une valeur de tolérance de moins de 25 %, de préférence de moins de 15 %.

7. Dispositif d'arrêt de sécurité selon l'une des revendications 1 à 6, **caractérisé en ce que**
le taux de changement maximal admissible $\Delta_{max}$ et/ou le flux de gaz maximal admissible $F_{max}$ sont définis de manière respectivement actuelle sur la base d'informations de consommation actuelles des consommateurs de gaz (16 à 18).

8. Dispositif d'arrêt de sécurité selon la revendication 7,
**caractérisé en ce que**
les consommateurs de gaz (16 à 18) transmettent des informations indiquant s'ils sont en marche ou à l'arrêt, et/ou sur la consommation de gaz escomptée à l'unité électronique (13) et/ou à l'unité d'évaluation (15), par exemple via un système de bus.

9. Dispositif d'arrêt de sécurité selon l'une des revendications 1 à 8,
**caractérisé en ce que**
l'unité d'évaluation (15) est en liaison active avec une unité de sortie d'informations (21) pour sortir une ou plusieurs des informations suivantes :

- flux de gaz actuel

- flux de gaz intégré sur une période de temps, en particulier flux de gaz intégré depuis un changement de bouteille
- quantité résiduelle actuellement disponible dans une bouteille de gaz ou un réservoir de stockage de gaz
- avertissement en cas de dépassement vers le bas d'une quantité résiduelle prédéterminée.

10. Dispositif d'arrêt de sécurité selon l'une des revendications 1 à 9,
**caractérisé en ce que**
un capteur d'accident (22, 23) destiné à déterminer un accident du véhicule et/ou de la remorque de véhicule est en outre prévu, qui se trouve en liaison active avec l'unité d'évaluation (15) et/ou l'unité électronique (13), sachant que l'unité électronique (13) active la vanne de gaz électromagnétique (12) destinée à arrêter l'arrivée de gaz en cas de signalisation d'accident provenant du capteur d'accident (22, 23).

11. Dispositif d'arrêt de sécurité selon l'une des revendications 1 à 10,
**caractérisé en ce que**
la vanne de gaz électromagnétique (12) arrête l'arrivée de gaz dans l'installation de gaz liquide (11) en l'absence d'alimentation en énergie électrique.

12. Dispositif d'arrêt de sécurité selon l'une des revendications 1 à 11,
**caractérisé en ce que**
la vanne de gaz électromagnétique (12) est située en aval d'un régulateur de pression (24) en termes d'écoulement de gaz.

13. Dispositif d'arrêt de sécurité selon la revendication 12,
**caractérisé en ce que**
la vanne de gaz électromagnétique (12) est placée directement au niveau du régulateur de pression (24).

14. Dispositif d'arrêt de sécurité selon la revendication 12 ou 13,
**caractérisé en ce que**
le régulateur de pression (24) est placé ou apte à être placé directement sur un réservoir de stockage de gaz (19, 20).

15. Dispositif d'arrêt de sécurité selon l'une des revendications 1 à 11,
**caractérisé en ce que**
la vanne de gaz électromagnétique (12) est située en amont d'un régulateur de pression (24) en termes d'écoulement de gaz.

16. Dispositif d'arrêt de sécurité selon la revendication 15,
**caractérisé en ce que**
la vanne de gaz électromagnétique (12) est placée ou apte à être placée directement sur un réservoir de stockage de gaz (19, 20).

17. Dispositif d'arrêt de sécurité selon la revendication 15 ou 16,
**caractérisé en ce que**
la vanne de gaz électromagnétique (12) est placée directement sur le régulateur de pression (24).

18. Dispositif d'arrêt de sécurité selon l'une des revendications précédentes,
**caractérisé en ce que**
la vanne de gaz électromagnétique (12) est raccordée ou apte à être raccordée à une batterie logée dans le véhicule et/ou la remorque de véhicule.

19. Dispositif d'arrêt de sécurité selon l'une des revendications précédentes,
**caractérisé en ce que**
le capteur d'accident est un capteur d'accélération (22) et/ou un capteur d'inclinaison (23).

20. Dispositif d'arrêt de sécurité selon l'une des revendications précédentes,
**caractérisé en ce que**
un commutateur (25) disposé de préférence à l'intérieur du véhicule ou de la remorque de véhicule est prévu pour la coupure manuelle de l'alimentation en gaz.

21. Dispositif d'arrêt de sécurité selon l'une des revendications précédentes,

**caractérisé en ce que**
un ou plusieurs capteurs supplémentaires sont prévus en plus, en particulier des capteurs de gaz et/ou des détecteurs de fumée qui déterminent des situations de danger supplémentaires, en particulier un échappement de gaz et/ou un incendie dans le véhicule et/ou la remorque de véhicule, sachant que les capteurs sont reliés à l'unité électronique (13) pour la transmission d'une signalisation de danger.

**22.** Dispositif d'arrêt de sécurité selon l'une des revendications précédentes,
**caractérisé en ce que**
l'unité électronique (13) et/ou les capteurs (22, 23) sont conçus de telle sorte que la vanne de gaz électromagnétique (12) arrête automatiquement l'arrivée de gaz en cas de défaut.

**23.** Installation de gaz liquide (11) pour véhicules et/ou remorques de véhicule avec un dispositif d'arrêt de sécurité selon l'une des revendications 1 à 22,

    a) dans laquelle un ou plusieurs réservoirs de stockage de gaz (19, 20) sont reliés ou aptes à être reliés à un ou plusieurs consommateurs de gaz (16 à 18) via une ou plusieurs conduites de gaz (26),
    b) avec un dispositif d'arrêt de sécurité (27) destiné à éviter un dégagement intempestif de gaz.

**24.** Procédé pour l'arrêt de sécurité d'une installation de gaz liquide (11) pour véhicules et/ou remorques de véhicule, en particulier d'une installation de gaz liquide (11) selon la revendication 23, destiné à éviter un dégagement intempestif de gaz, de préférence en utilisant un dispositif d'arrêt de sécurité (27) selon l'une des revendications 1 à 22, dans lequel

    a) un flux de gaz actuel $F_a$ qui s'écoule d'une source de gaz (19, 20) est déterminé,
    b) le flux de gaz actuel $F_a$ est comparé au flux de gaz précédent $F_v$ et
    c) si le flux de gaz actuel $F_a$ diffère du flux de gaz précédent $F_v$ de plus d'un taux de changement maximal admissible $\Delta_{max}$, l'arrivée de gaz est interrompue via une vanne de gaz activée électromagnétiquement (12).

**25.** Procédé selon la revendication 24, pour l'arrêt de sécurité d'une installation de gaz liquide (11) pour véhicules et/ou remorques de véhicule, en particulier d'une installation de gaz liquide (11) selon la revendication 23, destiné à éviter un dégagement intempestif de gaz en cas d'accident du véhicule et/ou de la remorque de véhicule, de préférence en utilisant un dispositif d'arrêt de sécurité (27) selon l'une des revendications 1 à 22, dans lequel

    a) un flux de gaz actuel $F_a$ qui s'écoule d'une source de gaz (19, 20) est déterminé,
    b) le flux de gaz actuel $F_a$ est comparé à un flux de gaz maximal admissible $F_{max}$ et
    c) si le flux de gaz actuel est supérieur au flux de gaz maximal admissible $F_{max}$, l'arrivée de gaz est interrompue via une vanne de gaz activée électromagnétiquement (12).

**26.** Procédé selon la revendication 24 ou 25,
**caractérisé en ce que**
pour l'arrêt de l'arrivée de gaz dans l'installation de gaz liquide, l'arrivée de courant à la vanne de gaz électromagnétique est interrompue.

**27.** Procédé selon l'une des revendications 24 à 26,
**caractérisé en ce que**
le taux de changement maximal admissible $\Delta_{max}$ et/ou le flux de gaz maximal admissible $F_{max}$ sont présélectionnés de manière fixe pour une configuration respectivement donnée de l'installation de gaz liquide (11) ou sont adaptés à des situations de consommation actuelles ou des situations de consommation escomptées au cours du fonctionnement de l'installation de gaz liquide (11).

FIG 1

Gasverbrauch

Obere Grenze

$F_{max}$

Kocher Flamme 1 ein

Kocher Flamme 2 ein

Kocher Flamme 3 ein

Gasbetrieb Kühlschrank ein

Heizung ein

Kocher Flamme 1 aus

Kocher Flamme 2 aus

Kocher Flamme 3 aus

unzulässige Steigerung

$\Delta_{max}$

$F_G$

$F_a$

$F_a - F_v > \Delta_{max}$

Anstieg zu groß

Abschaltung

$F_v$

Zeit

EP 2 020 560 B1

**FIG 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005040024 A1